(19) Europäisches Patentamt
European Patent Office
Office européen des brevets

(11) Publication number: **0 376 499 A1**

(12) **EUROPEAN PATENT APPLICATION**

(21) Application number: 89312505.4

(22) Date of filing: 30.11.89

(51) Int. Cl.5: C09D 133/06, //(C09D133/06, 161:32)

(30) Priority: 30.11.88 JP 304760/88

(43) Date of publication of application: 04.07.90 Bulletin 90/27

(84) Designated Contracting States: DE GB

(71) Applicant: NIPPON PAINT CO., LTD.
1-2, Oyodokita 2-chome Kita-ku
Osaka-shi(JP)

Applicant: TOYOTA JIDOSHA KABUSHIKI KAISHA
1, Toyota-cho Toyota-shi
Aichi-ken(JP)

(72) Inventor: Nishizawa, Koji Toyota Jidosha Kabushiki Kaisha
1, Toyota-cho
Toyota-shi Aichi-ken(JP)
Inventor: Kasawa, Susumu Toyota Jidosha Kabushiki Kaisha
1, Toyota-cho
Toyota-shi Aichi-ken(JP)
Inventor: Ito, Hiroshi
1-10-16, Hirashima
Ichinomiya-shi Aichi-ken(JP)
Inventor: Takechi, Sonoko
1-1, Heiwa-cho
Toyota-shi Aichi-ken(JP)

(74) Representative: Lamb, John Baxter et al
MARKS & CLERK 57/60 Lincoln's Inn Fields
London WC2A 3LS(GB)

(54) **Coating composition.**

(57) A coating composition comprises

(A) an acrylic resin having a glass transition point of from -30° to 20°C and a hydroxyl value of from 100 to 300;

(B) a lower alcohol-modified melamine resin having a mononuclear content of 40% or more and an etherification degree of 4 or more; and

(C) an acid catalyst; the weight ratio of (A)/(B), in terms of solids, being from 80/20 to 40/60 and (C) being present in an amount of from 0.2 to 3% of the total solids of the composition.

EP 0 376 499 A1

# Coating composition

The present invention relates to a coating composition and more specifically, a curing type coating composition capable of resulting a highly crosslinked coating which is excellent in scratch resistance and is especially useful as a top coat for automobile bodies and the like.

As a top coat composition for automobile bodies, electric appliances and the like, various combination of resins as melamine/alkyd resins, melamine/polyester resins, melamine/acrylic resin, melamine/acryl/epoxy resins, acryl/urethane resins and polyester/urethane resins have been widely used. Among them, particular attention has been directed to a combination of hard melamine resin and soft acryl resin because the film properties desired as a top coat can be comparatively easily controlled therewith. However, when an extremely soft acryl resin is used, various problems of blocking tendency, deficient hardness and inferior scratch resistance of the formed coating are inevitably occurred, and when an excessively hard melamine resin is used, cracks are generally generated and hence problems of insufficient durability and coat repairing properties are always encountered.

Thus, heretofore known coating compositions based on the combination of melamine resin and acryl resin have not come up to the fully satisfied level as a top coat for automobile bodies.

Recently, in an automobile industry, requirement of the coating composition capable of resulting a coating with deep color and far improved scratch resistance to brushing in an auto-washing machine has been markedly increased. Unfortunately, heretofore proposed metallic clear coatings have the drawbacks of inferior scratch resistance and hence could not be stand washing in an automatic washing machine. In order to improve scratch resistance, waxing resistance and the like, have also been proposed a top coat composition comprising a particular $\epsilon$-caprolactone modified acrylic resin, a specific polyester resin and a crosslinking agent as in Japanese Patent Publications (unexamined) Nos. 60-67517 and 6067516, an activation energy curable type clear coating composition as in Japanese Patent Publication (unexamined) Nos.62-132568, 62-132569, 62-132570 and 62-132571, a UV curable type clear coating composition as in Japanese Patent Publication (unexamined) No. 62-152841 and a coating composition comprising a particular polyesterpolyol, a polyisocyanate and a curing catalyst as in Japanese Patent Publication (unexamined) No. 63-86762.

However, they are not based on the combination of an acrylic resin and a melamine resin, which is believed to be the most desirable combination as a top coat for automobile bodies and the like.

A hard coating (hardness 4H~6H) represented by a coating derived from UV coating composition has an improved scratch resistance and however, it cannot be used as a top coat for automobile bodies because of inferior weather resistance and repairing characteristics.

It is, therefore, an object of the invention to provide a coating composition based on an acrylic resin and a melamine resin and capable of resulting a coating which is excellent in generic properties required in a top coat of automobile bodies as, for example, water resistance, alkali resistance, acid resistance, durability, impact resistance, finish appearance, gloss and the like, and also excellent in scratch resistance and repair working properties.

## Summary of the invention

According to the present invention, the abovementioned object can be attained with a coating composition comprising

(A) an acrylic resin having a glass transition point of -30°~20°C and a hydroxyl value of 100~300,

(B) a lower-alcohol-modified melamine resin having a mononuclear content of 40% or more and an etherification degree of 4 or more, and

(C) an acid catalyst, the ratio of (A)/(B), in terms of solid weight ratio, being 80/20~40/60 and the content of said (C) being 0.2~3% by weight of the total solid of coating composition. The first component used in the present coating composition is an acrylic resin having a glass transition point of -30°~20°C, preferably -20°~10°C and a hydroxyl value of 100~300, preferably 120~200. Such acrylic resin may be easily obtained by effecting a copolymerization of a hydroxyl group containing monomer and other copolymerizable monomer(s) in a usual way. If the glass trandition point (Tg) of said acrylic resin is lower than -30°C, there are problems of lowering in hardness and non-tackiness of coating prepared therefrom and if it exceeds over 20°C, lowering in scratch resistance. When a hydroxyl value of acrylic resin is less than 100, it is unable to obtain a fully satisfied crosslinking density at the time when reacted with a

melamine resin and therefore, there is a tendency of lowering in scratch resistance of the formed coating. Whereas, if the hydroxyl value exceeds over the limit of 300, water resistance of coating will become low due to an undesirable increase in hydrophilic property of the coating, as well as the decrease in exposure durability. Moreover, though it is not always necessary, the number average molecular weight of the acrylic resin should preferably be selected in a range of 700~50,000, and most preferably 1,000~10,000. This is because, if it is less than 700, it is unable to have the desired weather resistance and other desired properties of the coating because of its poor crosslinking density, and if it is more than 50,000, there is a tendency that the resin will become too viscous to use as a spraying composition, resulting a coating with poor coating finish.

In the present invention, together with the abovementioned acrylic resin, a particular melamine resin is used as the second component. Such resin is obtained by methylolization of melamine resin with formaldehyde and subsequently etherifiction with a lower alcohol having 1 to 4 carbon atoms. Among the melamine resins thus prepared, a particular class of resins having a high etherification degree, i.e. etherification degree of 4 or more, and a high mono-nuclear content, i.e. mono-nuclear content of 40% or more, are selectively and advantageously used in this invention. When the amount of mono-nuclear melamine is less than 40%, there is an undesirable increase in the self-condensation of the melamine resin molecules themselves, thereby causing deficient crosslinking with the acrylic resin and resulting inferior scratch resistance of the coating. As to the etherification degree, it is required to be 4 or more per triazine nucleus. If the etherification degree is lower than the abovementioned value, there is a marked increase in the amounts of -NH and $-NCH_2OH$ groups, whereby increasing the self-condensation tendency and lowering the uniform crosslinking properties and scratch resistance of the formed coating.

Examples of modifying alcohol are such lower alcohols as methanol, ethanol, n-propanol, n-butanol, isobutanol and the like. However, in the most preferable embodiment of the invention, said modification is carried out by a mixture of methanol and butanol because of resulting a coating with well balanced desirable properties. Particularly preferable modification alcohol is 2/8~8/2 mixture of methyl alcohol/butyl alcohol.

Various such melamine resins are easily available at the market, including Cymel 232, 235, 238 and 1130 (all manufacture by Mitsui Cyanamid Co., trademarks); Sumimal M66 (trademark, manufactured by Sumitomo Chem. Co.); Nicalack MX40 and MX45 (trademarks, manufactured by Sanwa Chem. Co.) and the like. Other melamine resins suitable in this invention include such methyl modified melamine resins as Cymel 303 and 350 (trademarks, manufactured by Mitsui Cyanamid Co.), Sumimal M100C (trademark, manufactured by Sumitomo Chem. Co.) and Nicalack MW-30 (trademark, manufactured by Sanwa Chem. Co.). Said acrylic resin and lower alcohol modified melamine resin are used in a solid weight ratio of 80/20~40/60, preferably 50/50~70/30.

The present composition, besides the abovementioned resinous components, further contains an acidic catalyst in an amount of 0.2~3%, preferably 0.5~2%, by weight of the total weight of the composition.

This is because, in the present invention, a melamine resin having a comparatively high etherification degree is selectively used and therefore, a fully satisfied curing cannot be obtained under normal baking conditions, e.g. baking at 140 °C for 30 minutes, unless a strong acid type external catalyst is used in said curing.

Examples of acid catalysts are strong sulfonic acid type catalysts as p-toluene sulfonic acid, dodecyl benzene sulfonic acid, dinonyl naphthalene sulfonic acid and the like. Various such catalysts are commercially available including Catalyst 4040 (p-toluene sulfonic acid, trademark, Mitsui Tohatsu), Catalyst 6000 (dodecyl benzene sulfonic acid, trademark, Mitsui Tohatsu), Neicure-155, X-49-110 and 3525 (dinonyl naphthalene sulfonic acid), Neicure 2500X (p-toluene sulfonic acid), Neicure 5225 (dodecyl benzene sulfonic acid), Neicure being trademark of King Co., and the like. However, acid catalysts are not limited to the abovementioned members and other acid catalysts customarily used in the known acryl-melamine resin compositions may be satisfactorily used in this invention.

The selection of particular acidic catalyst and its amount are appropriately determined after due consideration of coating properties desired and however, usually the amount of such catalyst is selected in a range of 0.2~3% by weight of the total weight of the coating composition.

If the amount of acid catalyst is less than 0.2%, there is a tendency that the intended crosslinking reaction can hardly be reached to the desired level, causing decrease in scratch resistance and other desirable properties of the film. Whereas, if the said amount is more than 3%, there often occurs an adverse effect of decrease in water resistance without any further increase in catalytic activity. In the present coating composition, one may add, besides the abovementioned components, other conventional paint additives as surface conditioner, UV absorber, anti-oxidant and the like, as optional components. Furthermore, coating use pigments, organic solvent and the like may be added if desired.

Thus obtained coating composition of this invention may be used, by spraying and other conventional application means, as a solid paint, a clear paint or a clear paint for metallic coating. More specifically, it may be used as a top clear coat for 2C/1B metallic coating, a top clear coat for 2C/1B solid coating, a top clear coat for 4C base/clear/clear coating and a protective clear coat for one solid coating. Thus applied coating is then baked at 120° ~160° C to give a coating having desired film properties as a top coat for automobile bodies and the like and having an excellent scratch resistance.

Regarding said improvements in various properties of the coating, the inventors are now believing as follows. That is, these improvements must have been born from the fact that crosslink molecular weight be controlled in a range of 400 or less by the selective use of particular resin combination, and modulus of elasticity of coating be greatly improved. Under the circumstances, deformation given by a brushing in an automatic washing machine is effectively controlled in a Hookean elasticity range, causing strain recovery and resulting improved scratch resistance of the coating.

The invention shall be nor more fully explained in the following Examples. Acrylic resins used in these Examples are prepared as follows:

Synthesis of acrylic resin:

Into a 2 liters separable flask fitted with a reflux condenser, a dropping funnel, a thermometer and a stirrer, were placed 440g of xylene and the content was heated to 120° C. Thereafter, a mixture of 90g of styrene, 235.3g of methyl methacrylate, 290.1g of hydroxy butyl acrylate, 261.5g of FM-3

$$\text{of FM-3}\ (CH_2=\overset{CH_3}{\overset{|}{C}}-COO-CH_2-CH_2-(O-\overset{O}{\overset{\|}{C}}-(CH_2)_5)_3-OH),$$

23.1g of acrylic acid and 18g of azobisisobutyronitrile was drop-wisely added from a dropping funnel to the flask at a constant speed in 3 hours and the combined was maintained at the same temperature for 30 minutes, added with a mixture of 50g of xylene and 1g of benzoyl peroxide, maintained at the same temperature for 2 hours and then diluted with 110g of xylene.

Thus obtained resin solution has a solid content of 60%, and the contained resin had a hydroxyl value of 160, an acid value of 20 and Tg of about 0° C.

Using the same procedures as stated hereinabove and the materials shown in Table 1, various acrylic resins were prepared and used in the following Examples.

As the melamine resins, commercially available resins having the properties shown in Table 1 were selected and used in the following Examples.

Examples 1~12 and Comparative Examples 1~4

In each Example, a clear coating composition was prepared by using an acylic resin, a melamine resin and an acid catalyst (dodecyl benzene sulfonic acid, abbreviated as DDBSA), the properties and amounts of these ingredients being shown in Table 1, and adding 0.1% (with respect to the total weight of the composition) of Modaflow (manufactured by Monsanto Chem.).

Then, the composition was diluted with a mixture of Solvesso 100/Solvesso 150/toluene = 28/60/12 to a viscosity of 22 seconds (Ford cup viscosity #4/20° C).

Thus obtained diluted composition was applied by air-spraying means onto a test plate previously prepared herein under stated so as to give a dry film thickness of 35μ, and after setting at room temperatures for 7 minutes, the coated plate was baked in a hot air electric drier, at 140° C for 30 minutes to obtain a coated test plate. Pencil hardness, impact strength, acid resistance, water resistance and scratch resistance of thus obtained coating were tested and the test results were shown in Table 1.

Preparation of test plate:

A steel plate (75x150x0.8mm) previously treated with Glanodin SD 5000 (zinc phosphating solution, trademark, NIppon Paint Co.) was applied with Power top U-30 (epoxy urethane cationic electrodeposition

coating composition, trademark, Nippon Paint Co.) to a dry film thickness of 30μ, baked at 170°C for 20 minutes, applied thereonto an intermediate coating composition, i.e. Orga P-2 (polyester resin base, gray colored intermediate coating composition, trademark, Nippon Paint Co.), to a dry film thickness of 35μ and then baked at 140°C for 20 minutes.

Test methods used and evaluation standards:

Scratch resistance:

A coated test plate was set in a rubbing tester (Dyed material friction durability tester) together with a cotton flannel applied with cleanser (bubbling cleanser, manufactured by Kaneyo K.K.). After rubbing the coated test plate with a 600g weighted flannel 10 times of reciprocating motion, 20° gloss values of the coating were measured before and after said rubbing test and gloss retention rate was determined and used as a measure of scratch resistance.

Scratch resistance in auto-washing machine:

A coated test plate was attached to the roof of automobile and subjected to 20 times washing with water only, in an automobile washing machine. Thereafter, the washed surface of said test plate was visually examined.
◎ : no scratching
O :slight scratching
Δ : considerable scratching
× : numerous scratching
Impact strength (cm): Dupont 500g

Acid resistance:

A polyethylene cylinder (inner diameter 38mm, hight 15mm) was placed on a coated test plate and strongly pressed against the plate by an appropriate pressing means. 5ml of 1/10 $NH_2SO_4$ were drop-wisely added to the opening of said cylinder and after leaving at 20°±2°C for 24 hours, the coating appearance was evaluated.
◎ : no change E=0
O : $\Delta$E 0.5 or less
Δ : $\Delta$E more than 0.5

Water resistance:

A coated test plate was dipped in a water bath maintained at 40°C for 240 hours. Thereafter, the coating was examined.
◎: no gloss-change, whitening and blister
O : slightly whitening, but no gloss-change and blister
Δ : slight loss in gloss and blister occurs
× : severe loss in gloss and marked whitening and blistering

Crosslink molecular weight (Mc) was determined by obtaining rubber-like elasticity E from a dynamic viscoelesticity measurement using Vibron (manufactured by Oreintex Co.) and making calculation with the equation:

$$Mc = \frac{3RT}{E'}$$

in which E' stands for rubber-like dynamic young's modulus (dyne/cm$^2$), R is a gas constant 8.31/x10$^7$ erg/deg.mol, and T is a measuring temperature °K.

Table 1

| | | Example | | | | |
|---|---|---|---|---|---|---|
| | | 1 | 2 | 3 | 4 | 5 |
| acrylic resin | molecular weight | 6000 | 6000 | 6000 | 6000 | 6000 |
| | Tg | 0 | -30 | 20 | 0 | 0 |
| | OH value | 160 | 160 | 160 | 100 | 200 |
| | AV | 20 | 20 | 20 | 20 | 20 |
| melamine resin | mono-nuclear content (%) | 60 | 60 | 60 | 60 | 60 |
| | etherification degree | 5 | 5 | 5 | 5 | 5 |
| | modifier | methyl/ butyl = 4/6 | methyl/ butyl = 4/6 | methyl/ butyl = 4/6 | methyl/ butyl = 4/6 | methyl/ butyl = 4/6 |
| acid catalyst | species | DDBSA | DDBSA | DDBSA | DDBSA | DDBSA |
| | amount (%) | 1 | 1 | 1 | 1 | 1 |
| acrylic resin/ melamine resin | | 6/4 | 6/4 | 6/4 | 6/4 | 6/4 |
| Scratch resistance | | 90 | 85 | 80 | 80 | 90 |
| Scratch resistance in an auto-washing machine | | ◎ | ◎ | ○ | ○ | ◎ |
| Crosslink molecular weight | | 130 | 160 | 200 | 190 | 120 |
| Pencil hardness | | F | B | F-H | F | F-H |
| impact strength | | 30 | 50 | 30 | 30 | 30 |
| acid resistance | | ◎ | ◎ | ◎ | ◎ | ○ |
| water resistance | | ◎ | ○ | ◎ | ◎ | ○ |

Table 1 (continued)

| | | Example | | | | |
|---|---|---|---|---|---|---|
| | | 6 | 7 | 8 | 9 | 10 |
| acrylic resin | molecular weight | 6000 | 6000 | 6000 | 6000 | 6000 |
| | Tg | 0 | -30 | 20 | 0 | 0 |
| | OH value | 300 | 160 | 160 | 160 | 160 |
| | AV | 20 | 20 | 20 | 20 | 20 |
| melamine resin | mono-nuclear content (%) | 60 | 40 | 60 | 60 | 60 |
| | etherification degree | 5 | 5 | 4 | 5 | 5 |
| | modifier | methyl/butyl = 4/6 | methyl/butyl = 4/6 | methyl/butyl = 4/6 | methyl/butyl = 4/6 | methyl/butyl = 4/6 |
| acid catalyst | species | DDBSA | DDBSA | DDBSA | DDBSA | DDBSA |
| | amount (%) | 1 | 1 | 1 | 1 | 0.5 |
| acrylic resin/melamine resin | | 6/4 | 6/4 | 6/4 | 7/3 | 6/4 |
| Scratch resistance | | 85 | 80 | 80 | 80 | 80 |
| Scratch resistance in an auto-washing machine | | ○ | ○ | ○ | ○ | ○ |
| Crosslink molecular weight | | 118 | 210 | 190 | 190 | 200 |
| Pencil hardness | | H | F | F | HB-F | HB-F |
| impact strength | | 20 | 30 | 25 | 35 | 35 |
| acid resistance | | △ | ◎ | ◎ | ◎ | ◎ |
| water resistance | | × | ◎ | ◎ | ◎ | ○ |

Table 1 (continued)

| | | Example | | Comparative Example | | | |
|---|---|---|---|---|---|---|---|
| | | 11 | 12 | 1 | 2 | 3 | 4 |
| acrylic resin | molecular weight | 6000 | 6000 | 6000 | 6000 | 6000 | 6000 |
| | Tg | 0 | 0 | 40 | 0 | 0 | 0 |
| | OH value | 160 | 160 | 160 | 160 | 160 | 160 |
| | AV | 20 | 20 | 20 | 20 | 20 | 20 |
| melamine resin | mono-nuclear content (%) | 60 | 60 | 30 | 60 | 60 | |
| | etherification degree | 5 | 5 | 5 | 5 | 3 | 5 |
| | modifier | methyl/ butyl = 4/6 | methyl/ butyl = 4/6 | methyl/ butyl = 4/6 | methyl/ butyl = 4/6 | methyl/ butyl = 4/6 | methyl/ butyl = 4/6 |
| acid catalyst | species | DDBSA | DDBSA | DDBSA | DDBSA | DDBSA | DDBSA |
| | amount (%) | 2.0 | 3.0 | 1 | 1 | 1 | 1 |
| acrylic resin/ melamine resin | | 6/4 | 6/4 | 6/4 | 6/4 | 6/4 | 8/2 |
| Scratch resistance | | 91 | 93 | 50 | 65 | 60 | 30 |
| Scratch resistance in an auto-washing machine | | ◎ | ◎ | △ | △ | △ | △ |
| Crosslink molecular weight | | 120 | 115 | 410 | 310 | 380 | 420 |
| Pencil hardness | | F-H | H | H | F | F-H | HB |
| impact strength | | 25 | 20 | 30 | 25 | 20 | 40 |
| acid resistance | | ◎ | ◎ | ◎ | ◎ | ◎ | ◎ |
| water resistance | | ○ | △ | ◎ | ◎ | ◎ | ○ |

## Claims

1. A coating composition comprising

(A) an acrylic resin having a glass transition point of from -30° to 20° C and a hydroxyl value of from 100 to 300;

(B) a lower alcohol-modified melamine resin having a mononuclear content of 40% or more and an etherification degree of 4 or more; and

(C) an acid catalyst;

the weight ratio of (A)/(B), in terms of solids, being from 80/20 to 40/60 and (C) being present in an amount of from 0.2 to 3% of the total solids of the composition.

2. A composition as claimed in claim 1 in which the acrylic resin has a glass transition point of from -20° C to 10° C.

3. A composition as claimed in claim 1 or claim 2 in which the acrylic resin has a hydroxyl value of

from 120 to 200.

4. A composition as claimed in any one of the preceding claims in which the acrylic resin has a number average molecular weight of from 700 to 50,000.

5. A composition as claimed in claim 4 in which the acrylic resin has a number average molecular weight of from 1,000 to 10,000.

6. A composition as claimed in any one of the preceding claims in which the weight ration of (A)/(B), in terms of solids is from 50/50 to 70/30.

European Patent Office

# EUROPEAN SEARCH REPORT

Application Number

EP 89 31 2505

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 144 681 (UNION CARBIDE CORP.) * Claims 10-11; page 16, lines 14-20; examples 12,16 * | 1-3 | C 09 D 133/06 // (C 09 D 133/06 C 09 D 161:32 ) |
| A | FR-A-2 235 958 (VIANOVA KUNSTHARZ AG) * Page 9, table II; examples * | 1 | |
| A | GB-A-2 030 992 (KANSAI PAINT CO., LTD) * Table 2, comp. example 2; page 4, lines 31-36 * | 1 | |
| X | FR-A-2 404 661 (KANSAI PAINT CO., LTD) * Claim 1; table 3, example 4 * | 1-4 | |

TECHNICAL FIELDS SEARCHED (Int. Cl.5)

C 09 D
C 08 L
C 08 K

The present search report has been drawn up for all claims

| Place of search | Date of completion of the search | Examiner |
|---|---|---|
| THE HAGUE | 31-01-1990 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)